(19) **Europäisches Patentamt**

**European Patent Office**

**Office européen des brevets**

(11) **EP 0 807 876 B1**

(12) **FASCICULE DE BREVET EUROPEEN**

(45) Date de publication et mention de la délivrance du brevet:
**05.12.2001   Bulletin 2001/49**

(51) Int Cl.⁷: **G05D 1/12**, F41G 3/22

(21) Numéro de dépôt: **97400939.1**

(22) Date de dépôt: **25.04.1997**

(54) **Dispositif de guidage d'un missile**

Einrichtung zur Lenkung von einem Flugkörper

Missile steering device

(84) Etats contractants désignés:
**BE DE ES GB IT NL SE**

(30) Priorité:  **13.05.1996  FR 9605897**

(43) Date de publication de la demande:
**19.11.1997   Bulletin 1997/47**

(73) Titulaire: **AEROSPATIALE MATRA**
**75016 Paris (FR)**

(72) Inventeurs:
• **Naccache, Frédéric**
  **91600 Savigny-Sur-Orge (FR)**
• **Panot, Christian**
  **78000 Versailles (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 209 411          EP-A- 0 409 614**
**WO-A-92/14982          US-A- 3 724 783**
**US-A- 4 096 380          US-A- 4 146 196**
**US-A- 4 202 246**

• **SID INTERNATIONAL SYMPOSIUM DIGEST OF TECHNICAL PAPERS, ANAHEIM, MAY 6 - 10, 1991, no. VOL. 22, 6 Mai 1991, SOCIETY FOR INFORMATION DISPLAY, pages 491-494, XP000503076 SELLERS J: "HELMET-MOUNTED DISPLAY ELECTRONICS FOR EVALUATING VIRTUAL PANORAMIC DISPLAY SYSTEMS"**

EP 0 807 876 B1

## Description

La présente invention concerne un dispositif de guidage d'un missile, par exemple un missile anti-char, vers une cible.

Plus particulièrement, elle concerne un dispositif de guidage du type comportant :

- un capteur d'images monté sur le missile, observant le paysage situé à l'avant dudit missile et susceptible d'engendrer des images dudit paysage observé ;
- des moyens de pilotage dudit missile, susceptibles de piloter ledit missile conformément à des ordres de pilotage ;
- des moyens de transmission susceptibles de transmettre des informations, dans les deux sens, entre ledit missile et une unité de commande ; et
- ladite unité de commande située au sol, susceptible de déterminer des ordres de pilotage dudit missile, à partir d'images du paysage engendrées par ledit capteur d'images et transmises par lesdits moyens de transmission, les ordres de pilotage ainsi déterminés par l'unité de commande étant transmis auxdits moyens de pilotage par lesdits moyens de transmission.

De façon connue, ladite unité de commande détermine les ordres de pilotage à partir de la position sur l'image d'une cible à atteindre, par exemple un char à détruire par le missile. A cet effet, ladite unité de commande comporte généralement des moyens de reconnaissance automatique de cible, qui déterminent automatiquement la position de ladite cible, à partir de caractéristiques visuelles prédéfinies, sur les images successives engendrées par le capteur d'images.

Une telle mise en oeuvre du guidage présente de nombreux inconvénients, notamment :

- la reconnaissance de cible doit être réalisée en temps réel, ce qui nécessite des algorithmes complexes et/ou des moyens coûteux ;
- ladite reconnaissance de cible est très sensible à l'environnement extérieur et notamment à l'éclairement ambiant. Elle peut notamment être perturbée dès que la cible ou des caractéristiques visuelles prédéfinies de cette dernière sont au moins partiellement cachées par des éléments de l'environnement, tels que des arbres ou de la fumée ; et
- un changement de cible n'est pas possible lors de la poursuite d'une cible déterminée, par exemple lorsque apparaît sur l'image une seconde cible plus intéressante en ce qui concerne la mission du missile.

Par le document US-A-4 096 380, on connaît un dispositif de guidage d'un missile, qui comporte :

- un capteur d'images monté sur le missile, observant le paysage situé à l'avant du missile et susceptible d'engendrer des images du paysage observé ;
- des moyens de pilotage du missile, susceptibles de piloter le missile conformément à des ordres de pilotage ;
- des moyens de transmission susceptibles de transmettre des informations, dans les deux sens, entre le missile et une unité de commande; et
- l'unité de commande située au sol, susceptible de déterminer des ordres de pilotage du missile, à partir d'images du paysage engendrées par le capteur d'images et transmises par les moyens de transmission, les ordres de pilotage ainsi déterminés par l'unité de commande étant transmis aux moyens de pilotage par les moyens de transmission.

De plus, l'unité de commande comporte :

- un système de projection d'images projetant, sur un écran placé devant un opérateur du dispositif de guidage, les images engendrées par le capteur d'images et transmises par les moyens de transmission ;
- un système de sélection permettant à l'opérateur de sélectionner manuellement une portion d'image qui est projetée sur l'écran ; et
- un système de calcul déterminant l'écartométrie entre la portion d'image sélectionnée manuellement par l'opérateur et le point du paysage vers lequel se dirige le missile sur l'image et déterminant à partir de cette écartométrie des ordres de pilotage permettant de piloter le missile vers la partie du paysage correspondant à la portion d'image sélectionnée.

Toutefois, comme la sélection de ladite portion d'image, c'est-à-dire la commande du missile, est réalisée manuellement par l'opérateur, ce dispositif connu ne permet pas audit opérateur de garder ses mains libres.

Par ailleurs, par le document WO-A-92/14982, on connaît un dispositif pour aligner un objet orientable, mais situé à poste fixe, sur un élément susceptible d'être mobile. Ledit dispositif comporte à cet effet une caméra solidaire de l'objet et prenant une image du paysage entourant ledit élément, image qui est projetée sur un support observé par un opérateur, et des moyens pour déterminer la direction d'observation de l'opérateur regardant ledit élément sur l'image, selon laquelle sera aligné l'objet orientable.

La mise en oeuvre de ce dispositif connu, présente des inconvénients puisqu'il est difficile pour l'opérateur d'avoir son regard continuellement fixé sur ladite image.

La présente invention a pour objet de remédier à ces inconvénients. Elle concerne un dispositif de guidage d'un missile, de coût réduit et particulièrement efficace, présentant de plus une précision accrue en ce qui concerne le pointage d'une cible à atteindre par ledit missile.

A cet effet, ledit dispositif de guidage d'un missile, ledit dispositif comportant :

- un capteur d'images monté sur le missile, observant le paysage situé à l'avant dudit missile et susceptible d'engendrer des images dudit paysage observé ;
- des moyens de pilotage dudit missile, susceptibles de piloter ledit missile conformément à des ordres de pilotage ;
- des moyens de transmission susceptibles de transmettre des informations, dans les deux sens, entre ledit missile et une unité de commande ; et
- ladite unité de commande située au sol, susceptible de déterminer à l'aide d'un système de calcul des ordres de pilotage dudit missile, à partir d'images du paysage engendrées par ledit capteur d'images et transmises par lesdits moyens de transmission, les ordres de pilotage ainsi déterminés par l'unité de commande étant transmis auxdits moyens de pilotage par lesdits moyens de transmission, et comportant un système de projection d'images projetant, sur un écran placé devant au moins un oeil d'un opérateur dudit dispositif de guidage, les images engendrées par ledit capteur d'images et transmises par lesdits moyens de transmission,

est remarquable en ce que ladite unité de commande comporte de plus :

- un système de détection pour déterminer la portion d'image regardée par ledit opérateur sur une image qui est projetée sur ledit écran, ledit opérateur regardant la portion d'image correspondant à la partie du paysage vers laquelle il désire que ledit missile soit guidé ; et
- un moyen de validation de la portion d'image regardée par l'opérateur sur une image projetée sur l'écran, ledit moyen de validation étant commandé par ledit opérateur ; et

le système de calcul détermine l'écartométrie entre la portion d'image regardée et validée par l'opérateur et le point du paysage vers lequel se dirige le missile sur l'image et détermine, à partir de cette écartométrie, les ordres de pilotage qui permettent de piloter ledit missile vers la partie du paysage correspondant à ladite portion d'image regardée et validée.

Ainsi, grâce à l'invention, la reconnaissance d'une cible à atteindre et/ou de la direction que doit suivre le missile sont déterminées par l'oeil de l'opérateur, et ledit dispositif de guidage est donc particulièrement précis et efficace, puisque :

- le pointage de ladite cible ou de ladite direction, effectué visuellement, est extrêmement précis ;
- un changement de cible est toujours possible, et de plus facilement par simple changement de direction de vue de l'oeil ;
- un guidage du missile reste possible même après une éventuelle sortie de la cible de l'image, à la différence généralement des dispositifs de guidage connus ; et
- le temps de réponse du dispositif de guidage est réduit.

De plus, la commande du guidage par un opérateur humain permet, à la différence des guidages complètement automatisés, une adaptation optimale du guidage à des situations imprévues, telles que l'apparition d'un obstacle à franchir par le missile.

En outre, le moyen de validation permet de remédier à la difficulté de l'oeil de rester continuellement fixé sur une portion d'image déterminée.

De façon avantageuse :

- au moins une partie desdits systèmes de projection et de détection est montée sur un casque porté par ledit opérateur ; et/ou
- ledit système de calcul est installé dans un sac à dos susceptible d'être porté par ledit opérateur, ce qui, d'une part, permet d'obtenir un dispositif facilement transportable et, d'autre part, permet à l'opérateur de garder ses mains libres au cours du guidage, par exemple pour réaliser ou préparer d'autres opérations.

De préférence, lesdits moyens de transmission comportent une liaison de transmission d'informations à fibre optique reliant le missile à l'unité de commande.

Toutefois, la présente invention peut également s'appliquer à des missiles comportant d'autres types de moyens de transmission, et notamment des moyens de transmission comprenant deux systèmes coopérants d'émission et de réception d'ondes électromagnétiques, dont l'un est monté sur le missile et dont l'autre est situé au sol et est relié à l'unité de commande.

Par ailleurs, l'unité de commande comporte avantageusement un système de traitement d'images traitant les images reçues dudit capteur d'images par l'intermédiaire desdits moyens de transmission, de manière à rendre les éléments caractéristiques essentiels de ces images facilement reconnaissables pour un opérateur humain, avant leur projection sur ledit écran.

De plus, de façon avantageuse, ladite unité de commande peut comporter des moyens pour détecter automatiquement une cible sur une image reçue dudit capteur d'images par l'intermédiaire desdits moyens de transmission, et des moyens pour mettre automatiquement en évidence sur l'image une cible ainsi détectée, avant la projection de ladite image sur ledit écran. Ceci permet d'apporter une aide efficace à l'opérateur lorsque les images sont particulièrement complexes et comportent beaucoup d'éléments ou cibles à identifier, en permettant audit opérateur de se concentrer sur un ou plusieurs de ces éléments ou cibles présélectionnés et mis en évidence.

Par ailleurs, afin de remédier aux imperfections d'exécution des ordres de pilotage, le dispositif de guidage conforme à l'invention comporte de plus, de façon avantageuse, des moyens de correction susceptibles :

- de réaliser des comparaisons entre, d'une part, des premières valeurs de paramètres relatifs au pilotage, mesurées par des capteurs montés sur le missile, lesdites premières valeurs étant représentatives du pilotage exécuté par ledit missile et, d'autre part, des secondes valeurs de ces paramètres, représentatives du pilotage commandé conformément aux ordres de pilotage déterminés par l'unité de commande ; et
- de déterminer, en fonction de ces comparaisons, des ordres de pilotage correctifs pour corriger d'éventuelles divergences desdites premières valeurs par rapport auxdites secondes valeurs.

Les figures du dessin annexé feront bien comprendre comment l'invention peut être réalisée. Sur ces figures, des références identiques désignent des éléments semblables.

La figure 1 montre schématiquement le dispositif de guidage conforme à l'invention.

La figure 2 illustre schématiquement l'unité de commande du dispositif de guidage conforme à l'invention.

La figure 3 est le schéma synoptique d'un système de détection de la portion d'image regardée par l'opérateur.

La figure 4 illustre ladite portion d'image regardée par l'opérateur.

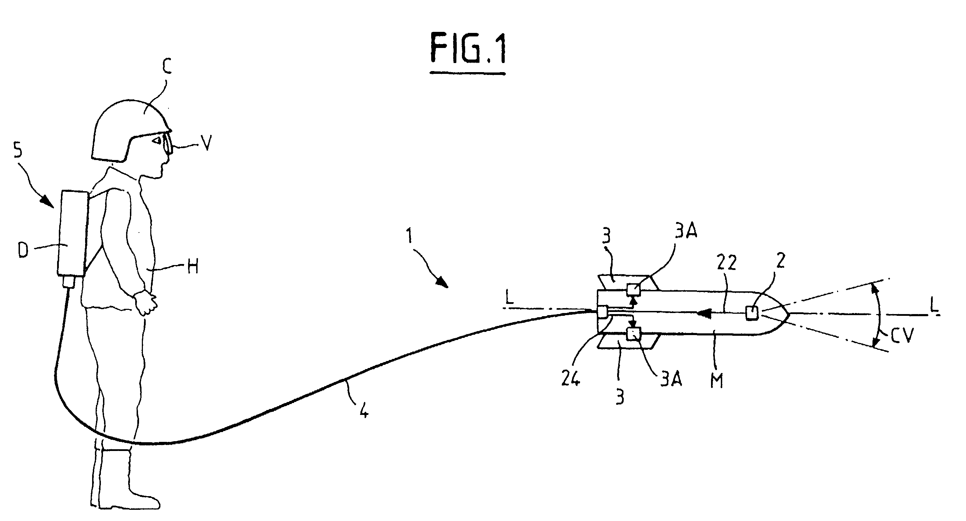

Le dispositif de guidage 1 conforme à l'invention est destiné au guidage d'un missile M, par exemple un missile anti-char, tel que représenté sur la figure 1.

A cet effet, ledit dispositif de guidage 1 est du type comportant :

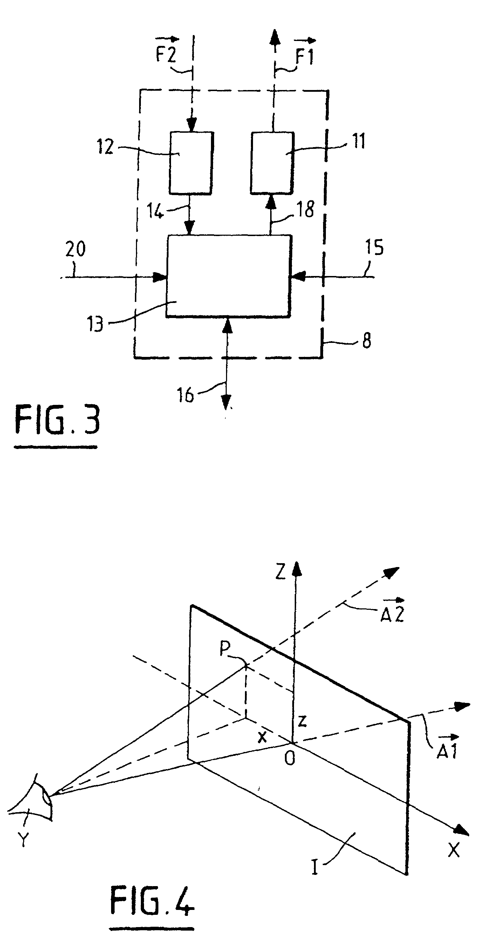

- un capteur d'images 2 monté sur le missile M, observant le paysage situé à l'avant dudit missile, selon un champ de vision CV qui est centré sur l'axe longitudinal L-L dudit missile M, et susceptible d'engendrer des images I représentées schématiquement sur la figure 4 dudit paysage observé ;
- des moyens de pilotage 3 dudit missile M, susceptibles de piloter ledit missile M conformément à des ordres de pilotage ;
- des moyens de transmission 4 susceptibles de transmettre des informations, dans les deux sens, entre ledit missile M et une unité de commande 5 ; et

- ladite unité de commande 5 située au sol, susceptible de déterminer des ordres de pilotage dudit missile M, à partir d'images I du paysage engendrées par ledit capteur d'images 2 et transmises par lesdits moyens de transmission 4, les ordres de pilotage ainsi déterminés par l'unité de commande 5 étant transmis auxdits moyens de pilotage 3 par lesdits moyens de transmission 4.

On notera que le champ de vision CV du capteur d'images 2 peut également être décentré par rapport à l'axe longitudinal L-L du missile M et peut par exemple être orienté vers l'avant et le bas du missile M.

Dans l'exemple de réalisation représenté sur la figure 1, les moyens de pilotage sont réalisés sous forme de gouvernes 3 du type connu, susceptibles d'être actionnées par des moyens d'actionnement 3A connus, représentés schématiquement.

Bien entendu, dans le cadre de la présente invention, on peut utiliser d'autres types connus de moyens de pilotage, comme par exemple des impulseurs pyrotechniques.

Le dispositif de guidage 1 qui est formé de la manière décrite précédemment est perfectionné selon la présente invention de manière à réaliser un guidage optimisé, notamment en ce qui concerne la précision du guidage.

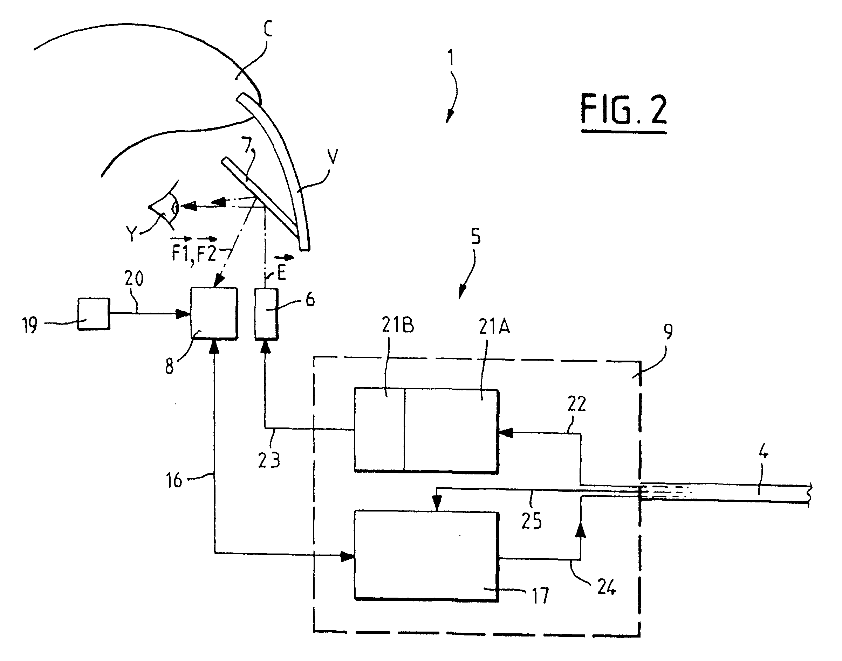

A cet effet, selon l'invention, ladite unité de commande 5 comporte, tel que représenté sur la figure 2 :

- un système de projection d'images 6 du type connu projetant, sur un écran 7 placé devant au moins un oeil Y d'un opérateur humain H dudit dispositif de guidage 1, les images I engendrées par ledit capteur d'images 2 et transmises par lesdits moyens de transmission 4, tel qu'indiqué par une flèche $\vec{E}$ ;
- un système de détection 8 pour déterminer la portion d'image P (voir figure 4) regardée par ledit opérateur H sur une image I qui est projetée sur ledit écran 7, ledit opérateur H regardant la portion d'image correspondant à la partie du paysage vers laquelle il désire que ledit missile M soit guidé ; et
- un système de calcul 9 déterminant l'écartométrie entre la portion d'image P regardée par l'opérateur H et le point du paysage O vers lequel se dirige le missile M sur l'image I et déterminant, à partir de cette écartométrie, des ordres de pilotage permettant de piloter ledit missile M vers la partie du paysage correspondant à ladite portion d'image regardée, lesdits ordres de pilotage étant transmis auxdits moyens de pilotage 3 par l'intermédiaire desdits moyens de transmission 4.

Ainsi, grâce à l'invention, le guidage est particulièrement précis et efficace, puisque :

- la détermination de la direction de guidage, qui est effectuée visuellement, est extrêmement précise ;

- un changement de direction de guidage est toujours possible, par simple changement de direction de vue de l'oeil Y de l'opérateur H ; et
- le temps de réponse du dispositif de guidage 1 est réduit.

Par ailleurs, comme on peut le voir sur la figure 1, lesdits moyens de transmission sont réalisés, dans un mode de réalisation préférentiel, sous forme d'une liaison à fibre optique 4 transmettant des informations précisées ci-dessous, dans les deux sens, entre le missile M et l'unité de commande 5. De façon connue, ladite fibre optique 4 est enroulée sur le missile M et elle se déroule au fur et à mesure de l'avancée dudit missile M.

Toutefois, dans un autre mode de réalisation non représenté de l'invention, lesdits moyens de transmission peuvent comporter deux systèmes coopérants d'émission et de réception d'ondes électromagnétiques, dont l'un est monté sur le missile et dont l'autre est situé au sol et est relié à l'unité de commande.

En outre, dans le mode de réalisation représenté sur les figures 1 et 2 :

- ledit écran 7 est solidaire de la visière V d'un casque C porté par ledit opérateur H ; et
- au moins ledit système de calcul 9 de l'unité de commande 5 est installé dans un sac à dos D porté par ledit opérateur H, ce qui permet de laisser libres les mains de l'opérateur H.

Par ailleurs, ledit système de détection 8 représenté schématiquement sur la figure 3 est du type connu et conforme par exemple à celui divulgué par le brevet FR-A-2 685 099 de la demanderesse. Par conséquent, ledit système de détection 8 comporte :

- une source de lumière 11 adressant un faisceau lumineux illustré par une flèche $\overrightarrow{F1}$ sur au moins un oeil Y de l'opérateur H, par exemple par l'intermédiaire de l'écran 7, pour former un reflet, par exemple cornéen et/ou rétinien, sur ledit oeil Y ;
- des moyens de prise de vue 12 observant le reflet ainsi formé, comme indiqué par une flèche $\overrightarrow{F2}$, et engendrant des premiers signaux, de préférence électriques, représentatifs de l'orientation de l'axe optique $\overrightarrow{A2}$ de l'oeil Y ; et
- des moyens de calcul 13 recevant lesdits premiers signaux engendrés par les moyens de prise de vue 12, par l'intermédiaire d'une liaison 14.

Lesdits moyens de calcul 13 reçoivent de plus, par une liaison 15, des seconds signaux représentatifs de l'image I du champ de vision CV, projetée sur l'écran 7 et observée par l'opérateur H. A cet effet, la liaison 15 peut être reliée, soit au système de projection d'images 6, soit au système de calcul 9. Lesdits moyens de calcul 13 déterminent, à partir desdits premiers et seconds signaux, la portion P dudit champ de vision CV regardée par ledit oeil Y de l'opérateur. Cette information est ensuite transmise par une liaison double 16 à des moyens de calcul 17 dudit système de calcul 9.

Lesdits moyens de calcul 17 déterminent alors, notamment à partir de cette dernière information, des ordres de pilotage du missile M, tel que précisé ci-dessous en référence à la figure 4.

Par ailleurs, ledit dispositif de guidage 1 comporte un moyen de validation 19 de la portion d'image P regardée par l'opérateur H sur une image I projetée sur l'écran 7.

Ledit moyen de validation 19 qui est, par exemple, relié par une liaison 20 aux moyens de calcul 13, est commandé manuellement ou vocalement par l'opérateur H. Ce moyen de validation 19 permet de remédier à la difficulté de l'oeil de rester continuellement fixé sur une portion d'image déterminée. Ainsi, dans ce mode de réalisation, uniquement les portions d'image regardées qui ont été validées par ledit moyen de validation 19 sont prises en compte pour la détermination des ordres de guidage.

En outre, l'unité de commande 9 comporte :

- un système de traitement d'images 21A traitant les images I reçues dudit capteur d'images 2 par l'intermédiaire desdits moyens de transmission 4, comme indiqué par une liaison 22, de manière à rendre les éléments caractéristiques essentiels non représentés de ces images I facilement reconnaissables pour l'opérateur humain H, avant leur projection sur ledit écran 7 ; et
- des moyens 21B associés audit système de traitement d'images 21A pour, d'une part, détecter automatiquement une cible (non représentée) sur une image I reçue dudit capteur d'images 2, et pour, d'autre part, mettre automatiquement en évidence sur l'image la cible ainsi détectée, avant la projection de ladite image sur ledit écran 7.

Ledit système de traitement d'images 21A et lesdits moyens 21B transmettent le résultat de leurs traitements réalisés de préférence successivement, par une liaison 23, audit système de projection d'images 6.

Pour la détermination des ordres de pilotage, les moyens de calcul 17 ont connaissance, tel que représenté sur la figure 4, de :

- la direction de l'axe optique $\overrightarrow{A2}$ de l'oeil Y, qui permet de déterminer la portion d'image, regardée par l'opérateur sur l'image I et illustrée par un point P sur ladite figure 4. Pour des raisons de clarté, on n'a pas représenté d'éléments du paysage sur l'image I de la figure 4 ; et
- la direction $\overrightarrow{A1}$ relative à la position du missile M qui, dans l'exemple représenté, se trouve au centre O de l'image I, puisque le champ de vision CV du capteur d'images 2 est centré sur l'axe longitudinal L-L du missile, comme indiqué précédemment.

A partir de ces informations, lesdits moyens de calcul 17 déterminent :

- les coordonnées x et z dudit point P (c'est-à-dire de la portion d'image regardée) dans un repère de référence OXZ de l'image I, lesdites coordonnées x et z étant représentatives de l'écartométrie précitée ; et
- les ordres de pilotage susceptibles d'annuler cette écartométrie, c'est-à-dire de guider le missile vers la partie du paysage indiquée par la direction $\overrightarrow{A2}$.

Lesdits ordres de pilotage qui sont déterminés de façon connue et non précisée davantage, sont transmis aux éléments d'actionnement 3A des gouvernes 3 du missile M, par l'intermédiaire des moyens de transmission 4, comme illustré par une liaison 24, de manière à guider le missile M en correspondance.

Par ailleurs, lesdits moyens de calcul 17 comportent des moyens de correction intégrés et susceptibles :

- de réaliser des comparaisons entre, d'une part, des premières valeurs de paramètres relatifs au pilotage, mesurées par des capteurs non représentés, par exemple des accéléromètres ou des gyromètres, montés sur le missile M, lesdites premières valeurs qui sont transmises par une liaison 25 auxdits moyens de correction étant représentatives du pilotage exécuté par ledit missile M et, d'autre part, des secondes valeurs de ces paramètres, représentatives du pilotage commandé conformément aux ordres de pilotage déterminés par l'unité de commande 5 ; et
- de déterminer, en fonction de ces comparaisons, des ordres de pilotage correctifs pour corriger d'éventuelles divergences desdites premières valeurs par rapport auxdites secondes valeurs.

## Revendications

1. Dispositif de guidage d'un missile (M), ledit dispositif comportant :

   - un capteur d'images (2) monté sur le missile (M), observant le paysage situé à l'avant dudit missile (M) et susceptible d'engendrer des images (I) dudit paysage observé ;
   - des moyens de pilotage (3) dudit missile (M), susceptibles de piloter ledit missile conformément à des ordres de pilotage ;
   - des moyens de transmission (4) susceptibles de transmettre des informations, dans les deux sens, entre ledit missile (M) et une unité de commande (5) ; et

   - ladite unité de commande (5) située au sol, susceptible de déterminer à l'aide d'un système de calcul (9) des ordres de pilotage dudit missile (M), à partir d'images (I) du paysage engendrées par ledit capteur d'images (2) et transmises par lesdits moyens de transmission (4), les ordres de pilotage ainsi déterminés par l'unité de commande (5) étant transmis auxdits moyens de pilotage (3) par lesdits moyens de transmission (4), et comportant un système de projection d'images (6) projetant, sur un écran (7) placé devant au moins un oeil (Y) d'un opérateur (H) dudit dispositif de guidage (1), les images (I) engendrées par ledit capteur d'images (2) et transmises par lesdits moyens de transmission (4),

   **caractérisé en ce que** ladite unité de commande (5) comporte de plus :

   - un système de détection (8) pour déterminer la portion d'image (P) regardée par ledit opérateur (H) sur une image (I) qui est projetée sur ledit écran (7), ledit opérateur (H) regardant la portion d'image (P) correspondant à la partie du paysage vers laquelle il désire que ledit missile (M) soit guidé ; et
   - un moyen de validation (19) de la portion d'image (P) regardée par l'opérateur (H) sur une image (I) projetée sur l'écran (7), ledit moyen de validation (19) étant commandé par ledit opérateur (H) ; et

   **en ce que** ledit système de calcul (9) détermine l'écartométrie entre la portion d'image (P) regardée et validée par l'opérateur et le point du paysage (O) vers lequel se dirige le missile sur l'image et détermine, à partir de cette écartométrie, les ordres de pilotage qui permettent de piloter ledit missile vers la partie du paysage correspondant à ladite portion d'image regardée et validée.

2. Dispositif de guidage selon la revendication 1, **caractérisé en ce qu'**au moins une partie desdits systèmes de projection (6) et de détection (8) est montée sur un casque (C) porté par ledit opérateur (H).

3. Dispositif de guidage selon l'une des revendications 1 ou 2, **caractérisé en ce que** ledit système de calcul (9) est installé dans un sac à dos (D) susceptible d'être porté par ledit opérateur (H).

4. Dispositif de guidage selon l'une quelconque des revendications 1 à 3, **caractérisé en ce que** lesdits moyens de transmission (4) comportent une liaison de transmission d'informations à fibre optique (4) reliant le missile (M) à l'unité de commande (5).

5. Dispositif de guidage selon l'une quelconque des revendications 1 à 3, **caractérisé en ce que** lesdits moyens de transmission comportent deux systèmes coopérants d'émission et de réception d'ondes électromagnétiques, dont l'un est monté sur le missile et dont l'autre est situé au sol et est relié à l'unité de commande.

6. Dispositif de guidage selon l'une des revendications 1 à 5, **caractérisé en ce qu'**il comporte une commande manuelle dudit moyen de validation (19).

7. Dispositif de guidage selon l'une des revendications 1 à 5, **caractérisé en ce qu'**il comporte une commande vocale dudit moyen de validation (19).

8. Dispositif de guidage selon l'une quelconque des revendications précédentes, **caractérisé en ce que** l'unité de commande (5) comporte un système de traitement d'images (21A) traitant les images (I) reçues dudit capteur d'images (2) par l'intermédiaire desdits moyens de transmission (4), de manière à rendre les éléments caractéristiques essentiels de ces images facilement reconnaissables pour un opérateur humain (H), avant leur projection sur ledit écran (7).

9. Dispositif de guidage selon l'une quelconque des revendications précédentes, **caractérisé en ce que** l'unité de commande (5) comporte des moyens (21B) pour détecter automatiquement une cible sur une image (I) reçue dudit capteur d'images (2) par l'intermédiaire desdits moyens de transmission (4), et des moyens (21B) pour mettre automatiquement en évidence sur l'image (I) une cible ainsi détectée, avant la projection de ladite image (I) sur ledit écran (7).

10. Dispositif de guidage selon l'une quelconque des revendications précédentes, **caractérisé en ce qu'**il comporte des moyens de correction (17) susceptibles :

- de réaliser des comparaisons entre, d'une part, des premières valeurs de paramètres relatifs au pilotage, mesurées par des capteurs montés sur le missile (M), lesdites premières valeurs étant représentatives du pilotage exécuté par ledit missile (M) et, d'autre part, des secondes valeurs de ces paramètres, représentatives du pilotage commandé conformément aux ordres de pilotage déterminés par l'unité de commande (5) ; et

- de déterminer, en fonction de ces comparaisons, des ordres de pilotage correctifs pour corriger d'éventuelles divergences desdites premières valeurs par rapport auxdites secondes valeurs.

**Patentansprüche**

1. Einrichtung zur Lenkung eines Flugkörpers (M), wobei diese Einrichtung folgendes umfasst:

- einen an dem Flugkörper (M) montierten Bildsensor (2), der die vor dem genannten Flugkörper (M) liegende Landschaft beobachtet und Bilder (I) von der genannten beobachteten Landschaft erzeugen kann;
- Mittel zur Steuerung (3) des genannten Flugkörpers (M), die den genannten Flugkörper gemäss Steuerbefehlen steuern können;
- Übertragungsmittel (4), die in beiden Richtungen zwischen dem genannten Flugkörper (M) und einer Steuereinheit (5) Informationen übertragen können; und
- die auf dem Boden befindliche genannte Steuereinheit (5). die mit Hilfe eines Rechensystems (9) auf der Grundlage von Bildern (I) der Landschaft, die vom genannten Bildsensor (2) erzeugt und von den genannten Übertragungsmitteln (4) übertragen wurden, Steuerbefehle des Flugkörpers (M) ermitteln kann, wobei die so von der Steuereinheit (5) ermittelten Steuerbefehle von den genannten Übertragungsmitteln (4) zu den genannten Steuermitteln (3) übertragen werden, und ein Bildprojektionssystem (6) umfasst, das die vom genannten Bildsensor (2) erzeugten und von den genannten Übertragungsmitteln (4) übertragenen Bilder (I) auf einen Bildschirm (7) projiziert, der mindestens vor einem Auge (Y) eines Bedieners (H) der genannten Lenkeinrichtung (1) angeordnet ist.

**dadurch gekennzeichnet, dass** die genannte Steuereinheit (5) weiterhin folgendes umfasst:

- ein Erfassungssystem (8) zur Ermittlung des Bildteils (P), das vom Bediener (H) auf einem auf den genannten Bildschirm (7) projizierten Bild (I) betrachtet wird, wobei der genannte Bediener (H) den Bildteil (P) betrachtet, der dem Landschaftsteil entspricht, zu dem er wünscht, dass der genannte Flugkörper (M) gelenkt wird; und
- ein Mittel zur Freigabe (19) des vom Bediener (H) auf einem auf den Bildschirm (7) projizierten Bild (I) betrachteten Bildteils (P), wobei das genannte Freigabemittel (19) vom genannten Bediener (H) gesteuert wird: und

dass das genannte Rechensystem (9) den Abstand zwischen dem betrachteten und vom Bediener freigegebenen Bildteil (P) und dem Punkt der Landschaft (O) ermittelt, auf den sich der Flugkörper auf dem Bild zu bewegt, und auf der Grundlage dieser Abstandsmessung die Steuerbefehle ermittelt, die es ermöglichen, den genannten Flugkörper zu dem Teil der Landschaft zu lenken, der dem genannten betrachteten und freigegebenen Bildteil entspricht.

2. Lenkeinrichtung gemäss Anspruch 1,
**dadurch gekennzeichnet, dass** mindestens ein Teil der genannten Projektions- (6) und Erfassungssysteme (8) auf einem Helm (C) montiert ist, den der genannte Bediener (H) trägt.

3. Lenkeinrichtung gemäss einem der Ansprüche 1 oder 2,
**dadurch gekennzeichnet, dass** das genannte Rechensystem (9) in einem Rucksack (D) angeordnet ist, den der genannte Bediener (H) tragen kann.

4. Lenkeinrichtung gemäss einem beliebigen der Ansprüche 1 bis 3,
**dadurch gekennzeichnet, dass** die genannten Übertragungsmittel (4) eine Verbindung zur Informationsübertragung mit Lichtwellenleiter (4) umfassen, die den Flugkörper (M) mit der Steuereinheit (5) verbindet.

5. Lenkeinrichtung gemäss einem beliebigen der Ansprüche 1 bis 3,
**dadurch gekennzeichnet, dass** die genannten Übertragungsmittel zwei zusammenwirkende Sende- und Empfangssysteme für elektromagnetische Wellen umfassen, von denen eines an dem Flugkörper montiert ist und das andere sich am Boden befindet und mit der Steuereinheit verbunden ist.

6. Lenkeinrichtung gemäss einem beliebigen der Ansprüche 1 bis 5,
**dadurch gekennzeichnet, dass** sie ein manuelles Steuerungsorgan für das genannte Freigabemittel (19) umfasst.

7. Lenkeinrichtung gemäss einem beliebigen der Ansprüche 1 bis 5,
**dadurch gekennzeichnet, dass** sie eine Sprachsteuerung für das genannte Freigabemittel (19) umfasst.

8. Lenkeinrichtung gemäss einem beliebigen der vorstehenden Ansprüche,
**dadurch gekennzeichnet, dass** die Steuereinheit (5) ein Bildverarbeitungssystem (21A) umfasst, das die vom genannten Bildsensor (2) über die genannten Übertragungsmittel (4) erhaltenen Bilder (I) verarbeitet, um die wesentlichen Kennelemente dieser Bilder vor ihrer Projektion auf den genannten Bildschirm (7) für einen Humanbediener (H) leicht erkennbar zu machen.

9. Lenkeinrichtung gemäss einem beliebigen der vorstehenden Ansprüche,
**dadurch gekennzeichnet, dass** die Steuereinheit (5) Mittel (21B) zur automatischen Erkennung eines Ziels auf einem über die genannten Übertragungsmittel (4) vom genannten Bildsensor (2) erhaltenen Bild (I) und Mittel (21B) umfasst, um auf dem Bild (I) ein so entdecktes Ziel vor der Projektion des genannten Bilds (I) auf den genannten Bildschirm (7) automatisch hervorzuheben.

10. Lenkeinrichtung gemäss einem beliebigen der vorstehenden Ansprüche,
**dadurch gekennzeichnet, dass** sie Korrekturmittel (17) umfasst, die folgendes können:

- Vergleiche durchführen zwischen einerseits ersten Werten von Steuerungsparametern, die von Sensoren, die an dem Flugkörper (M) montiert sind, gemessen werden, wobei die genannten ersten Werte repräsentativ sind für die von dem genannten Flugkörper (M) ausgeführte Steuerung, und andererseits zweiten Werten dieser Parameter, die repräsentativ für die Steuerung sind, die entsprechend den von der Steuereinheit (5) ermittelten Steuerbefehlen gesteuert wird; und
- in Abhängigkeit von diesen Vergleichen Korrektursteuerbefehle ermitteln, um eventuelle Abweichungen der genannten ersten Werte in Bezug auf die genannten zweiten Werte zu korrigieren.

**Claims**

1. Device for guiding a missile (M), the said device comprising:

- an image sensor (2) mounted on the missile (M), observing the landscape in front of the said missile (M) and capable of generating images (I) of the said observed landscape;
- means (3) of steering the said missile (M), capable of steering the said missile in accordance with steering commands;
- transmission means (4) capable of transmitting information, in both directions, between the said missile (M) and a control unit (5); and
- the said control unit (5), located on the ground, capable of determining, with the aid of a calculation system (9), steering commands for the said missile (M) on the basis of images (I) of the landscape which are generated by the said image sensor (2) and transmitted by the said transmission means (4), the steering commands thus determined by the control unit (5) being transmitted to the said steering means (3) by the said transmission means (4), and comprising an image-projection system (6) projecting, onto a screen (7) placed in front of at least one eye (Y) of an operator (H) of the said guidance device (1), the images (I) generated by the said image sensor (2) and transmitted via the said transmission means (4),

**characterized in that** the said control unit (5) additionally comprises:

- a detection system (8) for determining the portion of the image (P) at which the said operator (H) is looking on an image (I) projected onto the said screen (7), the said operator (H) looking at the image portion (P) corresponding to the part of the landscape towards which he wants the said missile (M) to be guided; and
- a means (19) of validating the image portion (P) at which the operator (H) is looking on an image (I) projected onto the screen (7), the said validation means (19) being controlled by the said operator (H); and

**in that** the said calculation system (9) determines the distance between the image portion (P) looked at and validated by the operator and the point (O) of the landscape towards which the missile is heading on the image and, on the basis of this distance measurement, determines the steering commands which allow the said missile to be steered towards the part of the landscape that corresponds to the said looked-at and validated image portion.

2. Guidance device according to Claim 1, **characterized in that** at least part of the said projection (6) and detection (8) systems is mounted on a helmet (C) worn by the said operator.

3. Guidance device according to one of Claims 1 and 2, **characterized in that** the said calculation system (9) is installed in a backpack (D) that the said operator (H) can wear.

4. Guidance device according to any one of Claims 1 to 3, **characterized in that** the said transmission means (4) comprise a fibre-optic information transmission link (4) connecting the missile (M) to the control unit (5).

5. Guidance device according to any one of Claims 1 to 3, **characterized in that** the said transmission means comprise two interacting systems for emitting and receiving electromagnetic waves, one of which is mounted on the missile and the other of which is situated on the ground and connected to the control unit.

6. Guidance device according to one of Claims 1 to 5, **characterized in that** it comprises manual control of the said validation means (19).

7. Guidance device according to one of Claims 1 to 5, **characterized in that** it comprises voice control of the said validation means (19).

8. Guidance device according to any one of the preceding claims, **characterized in that** the control unit (5) comprises an image-processing system (21A) processing the images (I) received from the said image sensor (2) via the said transmission means (4), in such a way as to make the essential characteristic features of these images easy for a human operator (H) to recognise before they are projected onto the said screen (7).

9. Guidance device according to any one of the preceding claims, **characterized in that** the control unit (5) comprises means (21B) for automatically detecting a target on an image (I) received from the said image sensor (2) via the said transmission means (4), and means (21B) for automatically emphasising a target thus detected on the image (I) before the said image (I) is projected onto the said screen (7).

10. Guidance device according to any one of the preceding claims, **characterized in that** it comprises correction means (17) capable:

- of making comparisons between, on the one hand, first values of parameters relating to steering and measured by sensors mounted on the missile (M), the said first values representing the steering performed by the said missile (M) and, on the other hand, second values of these parameters representing the steering commanded in accordance with the steering commands determined by the control unit (5); and
- of determining, as a function of these comparisons, corrective steering commands for correcting any divergence there may be between the said first values and the said second values.

FIG.1

## FIG. 2

FIG.3

FIG.4